# EUROPEAN PATENT SPECIFICATION

(11) **EP 2 560 804 B1**
(45) Date of publication and mention of the grant of the patent: **29.08.2018**
(21) Application number: 11772656.2
(22) Date of filing: 20.04.2011
(51) Int. Cl.: B23P 15/00, B29C 33/02, B29C 45/73

(54) **METHOD OF MANUFACTURING A MOLD WITH CONFORMAL COOLING PASSAGES**
VERFAHREN ZUR HERSTELLUNG EINER FORM MIT KONFORMEN KÜHLPASSAGEN
PROCÉDÉ DE FABRICATION D'UN MOULE COMPORTANT DES PASSAGES DE REFROIDISSEMENT CONFORMÉS

(30) Priority: 20.04.2010 US 763451
(43) Date of publication of application: 27.02.2013
(73) Proprietor: Honda Motor Co., Ltd., Minato-ku Tokyo 107-8556 (JP)
(72) Inventor: HUGHES, Alan, Prospect, OH 43342 (US)
(74) Representative: FRKelly
(86) International application number: PCT/US2011/033294
(87) International publication number: WO 2011/133697

(56) References cited:
- WO-A1-95/29032
- GB-A- 1 160 561
- JP-A- 10 128 802
- JP-A- H07 137 039
- JP-A- S60 118 388
- JP-A- 2010 201 846
- JP-U- S5 549 881
- US-A1- 2006 243 412
- US-A1- 2011 083 823

## Description

### TECHNICAL FIELD

The present invention is directed to a a method for forming a conformal fluid circulating passage in a part-producing mold and to a part-producing mold having improved cooling capabilities.

### BACKGROUND

Various types of part molding are known. For example, plastic parts are commonly produced by injection molding and other molding techniques. Of particular interest here are those molding techniques wherein mold temperature must be controlled, such as by cooling to account for heat buildup from the injection or other introduction thereto of molten molding material (e.g., molten plastic). The method of the present invention may also be used with molding applications wherein mold heating is required, however, only cooling will be discussed herein for purposes of simplicity.

Commonly, mold cooling has been accomplished by boring a series of interconnected cooling channels into the mold and circulating a cooling fluid, such as water, through the cooling channels. Such cooling channels are frequently bored into a mold from a rear (mounting) side of a mold, but connecting channels may also emanate from other surfaces as well. Aside from an inlet(s) and outlet(s), openings to the outside of the mold are normally plugged to prevent unintended leakage of cooling fluid. The cooling fluid is typically passed through a heat exchanger or another device capable of removing heat from the fluid to reduce its temperature after exiting a mold.

While this technique may be generally effective at reducing overall average mold temperature, it is not without problems. One such problem is the nonuniform cooling that typically results. More particularly, the known technique of circulating cooling fluid through bored cooling channels frequently results in a greater cooling of certain mold parts than others. Consequently, a mold cooled in this manner may have temperature disparities that can negatively affect part cycle times, part quality, etc.

Another problem with this known mold cooling technique is its inability to circulate cooling fluid near the actual molding surface of a mold, at least not in a uniform manner. As would be understood by one of skill in the art, most molding surfaces have a contoured shape - frequently, a highly contoured shape. Unfortunately, as should be apparent, it is virtually impossible to create a bored set of cooling channels that are able to mimic the contours of the molding surface. As such, the molding surface is commonly a portion of a mold that is non-uniformly cooled using known mold cooling techniques.

It is also the molding surface of a mold that is subjected to the greatest degree of heating due to its direct contact with molten molding material. Therefore, while the use of bored cooling channels may be reasonably effective at cooling a portion of a mold through which the cooling channels pass, such a technique is not particularly effective at efficiently cooling the molding surface of a mold.

Consequently, it should be apparent that a cooling technique that is able to more uniformly and more efficiently cool a mold and, more particularly, a molding surface of a mold, would be advantageous. The method of the present invention allows for the manufacture of a mold with such improved cooling characteristics.

US2006243412 discloses a molten material processing device having an elongated thermal element like a heating element, a thermocouple, a sensor, a heat pipe and a cooling pipe which is characterized in that the elongated thermal element is located in a recess provided in a surface of the molten material processing device, the recess, including a first portion and a second portion, has a cross-section which is larger than a cross-section of the thermal element, so as to provide a clear space between the thermal element and the surface of the processing device, the clear space which is limited by the first portion and the thermal element is filled by a thermally sprayed material and the second portion, which is adapted to the cross-section of the thermal element, partially surrounds and directly contacts same

### SUMMARY OF THE GENERAL INVENTIVE CONCEPT

The present disclosure provides a method as detailed in claim 1, and a part- producing mold according to claim 5. Advantageous features are provided in dependent claims.

The present invention is directed to a technique for manufacturing a part-producing mold having conformal cooling passages. Such a mold may include, without limitation, a plastic injection, compression, blow forming or vacuum forming mold, or a metal casting mold (die). More generally, the technique of the present invention may be used with a variety of processes that use cooperating preset forms to create an object from a provided supply of material, wherein such a process requires temperature control.

According to the present invention, a mold is imparted with cooling passages that substantially conform to the shape of the molding surface of the mold, thereby providing for more uniform cooling of the molding surface than has been previously possible. The method of the present invention is also able to impart a mold with cooling passages that are located close to the molding surface of a mold, thereby improving cooling efficiency with respect to the molding surface of the mold.

The method of the present invention is practiced by first producing a mold having a molding surface with substantially the desired contour. The molding surface need not be in final condition, but should at least exhibit substantially the contour desired of the finished surface.

Next, one or more open channels are placed into the molding surface of the mold using a CNC cutter or one of other various techniques known to those of skill in the art, such as but not limited to, steel casting, forging, arc gouging, etc. The channels preferably conform substantially to the contour of the molding surface into which they are cut. The channels may be of varying number, width, depth, shape and pattern, as would generally have been previously determined to provide proper cooling to the molding surface when cooling fluid is substantially circulated therethrough.

Once the open channels have been cut into the molding surface, a 3-D welding process, such as a TIG, MIG, Stick or GAS welding process is used to produce bridging welds that seal each channel. One particularly well-suited technique for creating such a bridging weld is a 3-D robotic TIG welding process. In any case, the selected 3-D welding process produces a series of small weld beads that, together, span the width of a channel and serve to form a sealing cap. This bridging weld is produced at some distance from the bottom of the cut channel so as to leave an open cooling passage area below the bridging weld.

Once the bridging welding operation is complete, the upper portion of each remaining open channel is filled, such as by welding, and excess fill material is subsequently machined or otherwise shaped to the contour of the surrounding molding surface. Preferably, the molding surface is subsequently provided with a Class A or similar finish that places the molding surface in condition to properly form a molded part.

Once all welding is complete, cooling lines may be connected to the mold at an inlet and outlet point purposely associated with the cooling passage(s). Cooling fluid may then be circulated through the open cooling passage(s) remaining below the molding surface. Because the remaining cooling passage(s) substantially conform to and reside near the molding surface, molding surface cooling is more uniformly and efficiently accomplished than has been possible with previously known techniques.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:
FIG. 1 is a transparent view showing a circuitous cooling passage running through an exemplary mold half of a part-producing mold;
FIG. 2 is a cross-sectional view taken along line 2-2 of FIG. 1, depicting a number of open channels cut into the molding surface of the mold half during one step of a method of the present invention, so as to form the circuitous cooling passage of FIG. 1;
FIG. 3a is an enlarged cross-sectional view of one of the open channels of FIG. 2, with a bridging weld placed therein in a subsequent step to form an underlying enclosed cooling passage;
FIG. 3b is a cross-sectional view showing the previously open channel of FIG. 3a fully filled to form a sealed cooling passage; and
FIG. 4 shows the mold half of FIG. 2 with the conformal cooling passage of FIG. 1 fully formed therein after completion of a cooling passage forming method of the present invention.

### DETAILED DESCRIPTION OF EXEMPLARY EMBODIMENT(S)

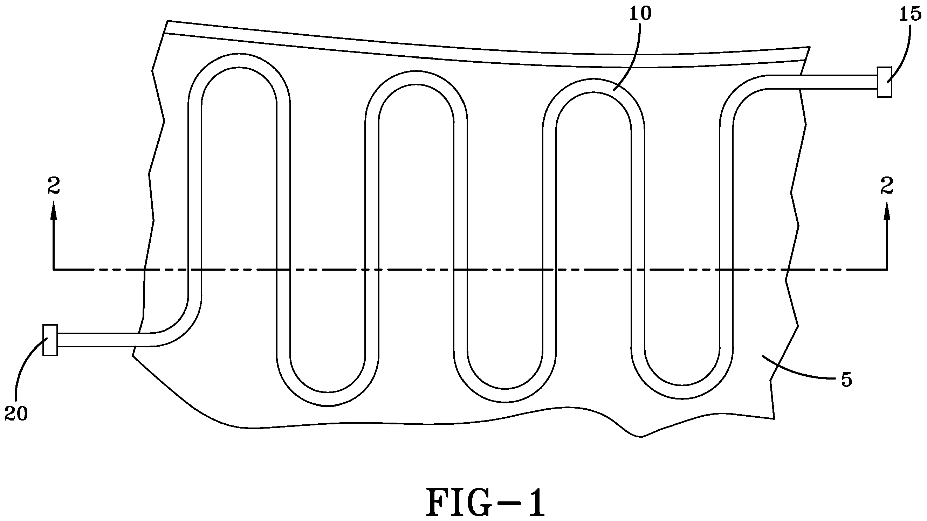

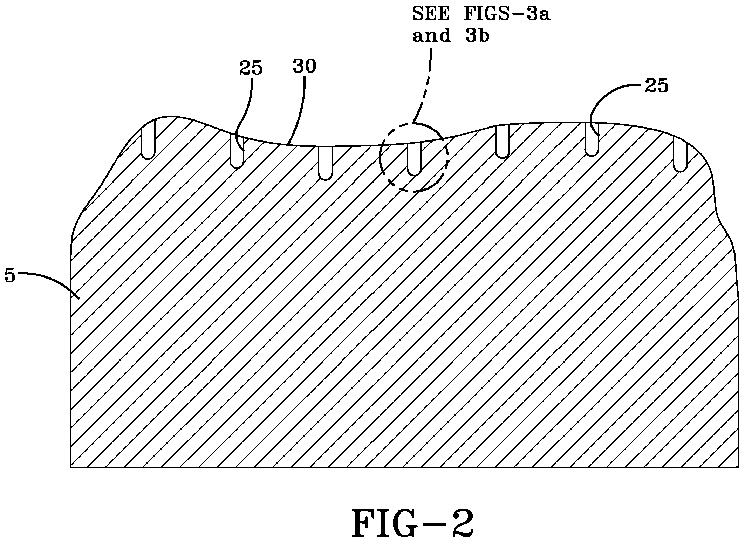

A transparent plan view of an exemplary mold half **5** having a sub-surface conformal cooling passage **10** formed according to the present invention is illustrated in FIG. 1. Although the mold half **5** and the cooling passage **10** can only be shown in two dimensions herein, it should be understood, and is more readily apparent from FIGS. 2-4, that the mold half would also generally have a contoured shape in a third dimension instead of the planar shape conveyed herein. That is, while the portion of the mold half **5** overlying the cooling passage **10** may be planar, it is more likely to have at least some contour.

As shown in FIG. 1, this particular cooling passage **10** follows a circuitous path through the mold half **5,** from a coolant inlet **15** to a coolant outlet **20.** The particular path followed by the coolant passage **10** in this embodiment is provided for purposes of illustration only, and the present invention is not limited to any particular coolant passage layout. Similarly, the size and spacing of the coolant passage sections and the spacing therebetween may also vary as necessary to provide the desired cooling effect. Further, while only one coolant passage is shown and described herein, it should also be realized that a given portion of a mold may have a plurality of individual coolant passages.

A method of creating the coolant passage **10** in the mold half **5** is illustrated in FIGS. 2-4. As can be understood from a review of FIG. 2., a series of interconnected open channels **25** are first cut into a molding surface **30** of the mold half **5.** The channels **25** may be placed into the mold half **5** by any of various techniques such as, for example, with a CNC machining apparatus, or by any of the other techniques mentioned above or otherwise known in the art.

The channels **25** are of some predetermined width and extend to some predetermined depth below the molding surface, as would generally be calculated based on various physical characteristics of the mold, the material that will be molded, the degree of desired cooling, etc. Such cooling design techniques are well known to those of skill in the art, and all such techniques, manual and computer-based, may be used in conjunction with the present invention.

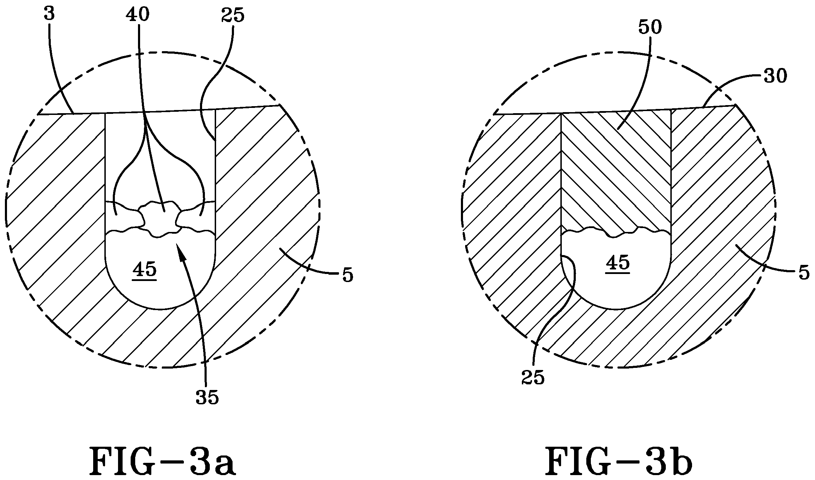

As most clearly shown in FIGS. 3a-3b, once the open channels **25** have been cut into the molding surface **30** of the mold half **5,** a 3-D welding process, such as a TIG, MIG, Stick or GAS welding process is used to produce a bridging weld **35** within each channel. For example, a robotic 3-D TIG welding process may be employed for this purpose. The 3-D welding process produces a series of small connected weld beads **40** that, together, span the width of the channel **25** and serve to seal the channel. While only three individual weld beads **40** are shown to bridge the channel **25** for purposes of clarity, it should be understood that a greater number of individual weld beads may be required in this regard. This bridging weld **35** is produced at some distance from the bottom of the channel **25** so as to enclose an open cooling passage **45** below the bridging weld.

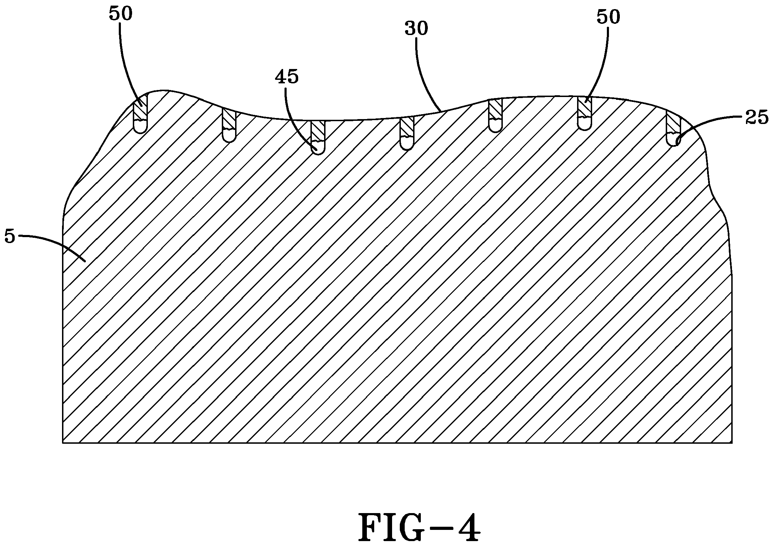

As illustrated in FIG. 3b and FIG. 4, once each bridging welding operation is complete, the open area of each channel **25** above the bridging weld **35** is filled. In this particular embodiment, the open area of each channel **25** above the bridging weld **35** is filled with welding material **50.** The use of other fillers may also be possible, such as, for example, epoxies.

According to the method of the present invention, the channels cut into a mold will typically be filled with welding material **50** until the welding material extends at least slightly above the molding surface of the mold half. After the remainder of the channels **25** are appropriately filled with welding material **50,** the excess welding material is machined or otherwise shaped to the contour of the surrounding molding surface **30,** as is also shown in FIG. 3b. Preferably, the molding surface **30** is subsequently provided with a Class A or similar finish that places the molding surface in condition to properly form a molded part. As can be best observed in FIG. 4, use of the aforementioned bridge weld **35** and subsequent filling of channels **25** cut into the molding surface **30** of the mold half **5** allows for the production of a solid molding surface with an underlying open coolant passage **10.**

A coolant passage produced in a mold by a method of the present invention may be connected to a source of coolant in a manner similar to that of other known mold cooling techniques. To that end, a coolant passage of the present invention may be constructed with an inlet end and an outlet end that are accessible from outside a mold. Such an exemplary construction is represented in FIG. 1.

It can be understood from the foregoing description and accompanying drawing figures that a method of the present invention allows for the formation of sub-surface conformal cooling passages in part-producing molds. These cooling passages are able to substantially conform to the contour of the molding surface of a given mold and may reside near to the molding surface so as to provide effective and efficient cooling thereof. Because a cooling passage(s) produced substantially conforms to and resides near the molding surface, molding surface cooling is more uniformly and efficiently accomplished than with previously known techniques.

The method of the present invention may be used on various types of molds. For example, the method of the present invention may be used to produce conformal cooling passages in plastic injection molds through which cooling fluid is circulated. However, as described above, a method of the present invention may also be used to produce conformal cooling passages in a plastic compression, blow forming or vacuum forming mold, a metal casting die, and may be used with other temperature controlled manufacturing processes that employ cooperating preset forms to create an object from a provided supply of material.

Further, although the present description is directed at forming passages for circulating cooling fluid, it has been clarified herein and should be apparent that the method of the present invention may also be employed to form conformal fluid circulating passages in a mold or die, regardless of whether the circulated fluid is used to cool or heat the mold/die. Therefore, although the method of the present invention produces good results when used to produce conformal mold cooling passages for the cooling of molds, the present invention is not limited to mold cooling applications.

While certain embodiments of the present invention are described in detail above, the scope of the invention is not to be considered limited by such disclosure, and modifications are possible within the scope of the invention as evidenced by the following claims:

## Claims

1. A method for forming a conformal fluid circulating passage (10) in a part-producing mold, comprising:
creating a series of open channels (25) in a molding surface (30) of a mold of interest, the depth of said channels (25) substantially conforming to the contour of said molding surface (30);
placing a bridging weld (35) within each channel (25), said bridging weld (35) comprising a series of connected weld beads (40), said bridging weld (35) spanning and sealing each channel (25) and located in each channel (25) at some distance from a bottom of each channel (25) so as to form an enclosed passage at the bottom thereof;
filling a remaining volume of each channel (25) above said bridging weld by a plurality of weld beads to close each channel (25), said plurality of weld beads located at an open end of each channel; and
shaping a filled portion of each channel (25) which comprises the plurality of weld beads to conform to said molding surface (30) surrounding that channel (25).

2. The method of claim 1, further comprising providing an inlet (15) and an outlet (20) to said conformal fluid circulating passage (10), said inlet (15) and outlet (20) accessible from an exterior of a mold for connection to a source of circulating fluid.

3. The method of claim 1 or 2, wherein said conformal fluid circulating passage (10) is formed in a plastic injection mold.

4. The method of claim 1 or 2, wherein said conformal fluid circulating passage (10) is a cooling passage for circulating cooling fluid.

5. A part-producing mold having improved cooling capabilities, comprising:
at least one conformal cooling passage (10) located subjacent to a molding surface (30) to be cooled, said at least one conformal cooling passage (10) formed from:
a series of interconnected open channels (25) placed in a molding surface (30) of said mold, said channels (25) substantially conforming to the contour of said molding surface (30),
a bridging weld (35) located within each channel (25), said bridging weld (35) comprising a series of connected weld beads (40), said bridging weld (35) spanning and sealing each channel (25) and located in each channel (25) at some distance from a bottom of each channel so as to form an enclosed cooling passage at the bottom thereof, and
a plurality of weld beads that solidly fill a remaining volume of each channel (25) above said bridging weld to close each channel (25), said weld beads located at an open end of each channel (25) shaped to conform to said molding surface (30) of said mold surrounding that channel (25);
an inlet (15) associated with said at least one conformal cooling passage (10) for receiving pressurized cooling fluid from a source thereof; and
an outlet (20) associated with said at least one conformal cooling passage (10) for expelling cooling fluid to a heat removal device after said cooling fluid has passed through said at least one conformal cooling passage (10).

6. The mold of claim 5, wherein said mold is a plastic injection mold.

7. The mold of claim 5 or 6, wherein said inlet (15) and outlet (20) of said at least one conformal cooling passage (10) are accessible from an exterior of said mold.

## Patentansprüche

1. Verfahren zur Herstellung einer konformen Fluidumlaufpassage (10) in einer teilefertigenden Form, umfassend:
Herstellen einer Reihe offener Kanäle (25) in einer Formfläche (30) einer Form von Interesse, wobei die Tiefe der Kanäle (25) im Wesentlichen an die Kontur der Formfläche (30) angepasst ist; Setzen einer Brückenschweißnaht (35) innerhalb jedes Kanals (25), wobei die Brückenschweißnaht (35) eine Reihe verbundener Schweißperlen (40) umfasst, wobei die Brückenschweißnaht (35) jeden Kanal (25) überspannt und verschließt und in jedem Kanal (25) in einem bestimmten Abstand von einem Boden jedes Kanals (25) angeordnet ist, um eine geschlossene Passage an dessen Boden herzustellen;
Füllen eines verbleibenden Volumens jedes Kanals (25) über der Brückenschweißnaht mit einer Vielzahl von Schweißperlen, um jeden Kanal (25) zu verschließen, wobei die Vielzahl von Schweißperlen an einem offenen Ende jedes Kanals angeordnet ist; und
Formen eines gefüllten Abschnitts jedes Kanals (25), der die Vielzahl von Schweißperlen umfasst, so dass er an die Formfläche (30), die den Kanal (25) umgibt, angepasst ist.

2. Verfahren nach Anspruch 1, weiter umfassend das Bereitstellen eines Einlasses (15) und eines Auslasses (20) für die konforme Fluidumlaufpassage (10), wobei der Einlass (15) und der Auslass (20) von einer Außenseite einer Form zum Anschluss an eine Quelle umlaufenden Fluids zugänglich sind.

3. Verfahren nach Anspruch 1 oder 2, wobei die konforme Fluidumlaufpassage (10) in einer Kunststoffspritzgussform hergestellt wird.

4. Verfahren nach Anspruch 1 oder 2, wobei die konforme Fluidumlaufpassage (10) eine Kühlpassage für umlaufendes Kühlmedium ist.

5. Teilefertigende Form, die verbesserte Kühlfähigkeiten aufweist, umfassend:
mindestens eine konforme Kühlpassage (10), die unter einer Formfläche (30), die zu kühlen ist, liegend angeordnet ist, wobei die mindestens eine konforme Kühlpassage (10) gebildet wird aus:
einer Reihe verbundener offener Kanäle (25), die in einer Formfläche (30) der Form angeordnet sind, wobei die Kanäle (25) im Wesentlichen an die Kontur der Formfläche (30) angepasst sind,
einer Brückenschweißnaht (35), die innerhalb jedes Kanals (25) angeordnet ist, wobei die Brückenschweißnaht (35) eine Reihe verbundener Schweißperlen (40) umfasst, die Brückenschweißnaht (35) jeden Kanal (25) überspannt und verschließt und in jedem Kanal (25) in einem bestimmten Abstand von einem Boden jedes Kanals angeordnet ist, um eine geschlossene Kühlpassage an dessen Boden zu bilden, und
einer Vielzahl von Schweißperlen, die ein verbleibendes Volumen jedes Kanals (25) über der Brückenschweißnaht massiv füllt, um jeden Kanal (25) zu verschließen, wobei die Schweißperlen an einem offenen Ende jedes Kanals (25) angeordnet sind, das geformt ist, um sich an die Formfläche (30) der Form, die den Kanal (25) umgibt, anzupassen,
einen Einlass (15) in Verbindung mit der mindestens einen konformen Kühlpassage (10) zum Aufnehmen von unter Druck stehendem Kühlmedium aus einer Quelle davon; und
einen Auslass (20) in Verbindung mit der mindestens einen konformen Kühlpassage (10) zum Ausstoßen von Kühlmedium zu einer Vorrichtung zur Wärmeabfuhr, nachdem das Kühlmedium diese mindestens eine konforme Kühlpassage (10) passiert hat.

6. Form nach Anspruch 5, wobei die Form eine Kunststoffspritzgussform ist.

7. Form nach Anspruch 5 oder 6, wobei der Einlass (15) und der Auslass (20) der mindestens einen konformen Kühlpassage (10) von einer Außenseite der Form zugänglich sind.

## Revendications

1. Procédé pour former un passage de fluide de circulation conformé (10) dans un moule de production de pièces, comprenant :
la création d'un ensemble de canaux ouverts (25) dans une surface de moulage (30) d'un moule d'intérêt, la profondeur desdits canaux (25) se conformant sensiblement au contour de ladite surface de moulage (30) ;
le placement d'une soudure de pontage (35) à l'intérieur de chaque canal (25), ladite soudure de pontage (35) comprenant un ensemble de cordons de soudure reliés (40), ladite soudure de pontage (35) recouvrant et scellant chaque canal (25) et étant située dans chaque canal (25) à une certaine distance d'un fond de chaque canal (25) de manière à former un passage fermé au fond de celui-ci ;
le remplissage d'un volume restant de chaque canal (25) au-dessus de ladite soudure de pontage par une pluralité de cordons de soudure pour fermer chaque canal (25), ladite pluralité de cordons de soudure étant situés au niveau d'une extrémité ouverte de chaque canal ; et
la mise en forme d'une partie remplie de chaque canal (25) qui comprend la pluralité de cordons de soudure pour la conformer à ladite surface de moulage (30) entourant ce canal (25).

2. Procédé selon la revendication 1, comprenant en outre la fourniture d'une entrée (15) et d'une sortie (20) audit passage de fluide de circulation conformé (10), ladite entrée (15) et ladite sortie (20) étant accessibles depuis l'extérieur d'un moule pour une liaison à une source de fluide en circulation.

3. Procédé selon la revendication 1 ou 2, dans lequel ledit passage de fluide de circulation conformé (10) est formé dans un moule à injection de plastique.

4. Procédé selon la revendication 1 ou 2, dans lequel ledit passage de fluide de circulation conformé (10) est un passage de refroidissement pour un fluide de refroidissement en circulation.

5. Moule de production de pièces ayant des capacités de refroidissement améliorées, comprenant :
au moins un passage de refroidissement conformé (10) situé adjacent à une surface de moulage (30) à refroidir, ledit au moins un passage de refroidissement conformé (10) étant formé de :
- un ensemble de canaux ouverts raccordés (25) placés dans une surface de moulage (30) dudit moule, lesdits canaux (25) se conformant sensiblement au contour de ladite surface de moulage (30),
- une soudure de pontage (35) située à l'intérieur de chaque canal (25), ladite soudure de pontage (35) comprenant un ensemble de cordons de soudure reliés (40), ladite soudure de pontage (35) recouvrant et scellant chaque canal (25) et étant située dans chaque canal (25) à une certaine distance d'un fond de chaque canal de manière à former un passage de refroidissement fermé au fond de celui-ci, et
- une pluralité de cordons de soudure qui remplissent solidement un volume restant de chaque canal (25) au-dessus de ladite soudure de pontage pour fermer chaque canal (25), lesdits cordons de soudure étant situés au niveau d'une extrémité ouverte de chaque canal (25) mise en forme pour la conformer à ladite surface de moulage (30) dudit moulage entourant ce canal (25) ;
- une entrée (15) associée audit au moins un passage de refroidissement conformé (10) pour recevoir un fluide de refroidissement sous pression en provenance d'une source de celui-ci ; et
- une sortie (20) associée audit au moins un passage de refroidissement conformé (10) pour éjecter un fluide de refroidissement vers un dispositif de dissipation de chaleur après que ledit fluide de refroidissement est passé à travers ledit au moins un passage de refroidissement conformé (10).

6. Moule selon la revendication 5, dans lequel ledit moule est un moule à injection de plastique.

7. Moule selon la revendication 5 ou 6, dans lequel ladite entrée (15) et ladite sortie (20) dudit au moins un passage de refroidissement conformé (10) sont accessibles depuis l'extérieur dudit moule.
